# EUROPEAN PATENT APPLICATION

(11) **EP 2 330 305 A1**
(43) Date of publication of application: **08.06.2011**
(21) Application number: 10188225.6
(22) Date of filing: 20.10.2010
(51) Int. Cl.: F16B 7/02, F16B 7/04, F16B 7/18, F16D 1/033, F01D 5/02

(54) **A male or female element for a conic coupling**

(30) Priority: 03.11.2009 GB 0919202
(71) Applicant: Rolls-Royce plc, London SW1E 6AT (GB)
(72) Inventor: Clarke, Derek Walter John, Bristol, South Gloucestershire BS32 0BY (GB)
(74) Representative: Tindall, Adam

(57) **Abstract**

A male or female element (112;102) for a conic coupling, the element comprising: an end surface (116;106) and two angled side surfaces (118;108) disposed either side of the end surface (116;106); wherein a coating is applied to at least one of the side surfaces, the coating having a varying coefficient of friction across the surface.

## Description

The present invention relates to conic couplings and particularly but not exclusively to conic couplings for use in a turbomachine.

### Background

A coupling is a device which generally acts to transfer the rotational movement of one rotating component to a second component. There are many types of coupling available which may be selected depending on the particular application. For example, a coupling may comprise a simple arrangement of abutting flanges which are connected by bolts. More complex couplings may comprise splines which are effective for transmitting high torsional loads between components. For example, a Curvic coupling has splines which are curved. However, the splines of such couplings makes the manufacture, installation and maintenance of the coupling more difficult.

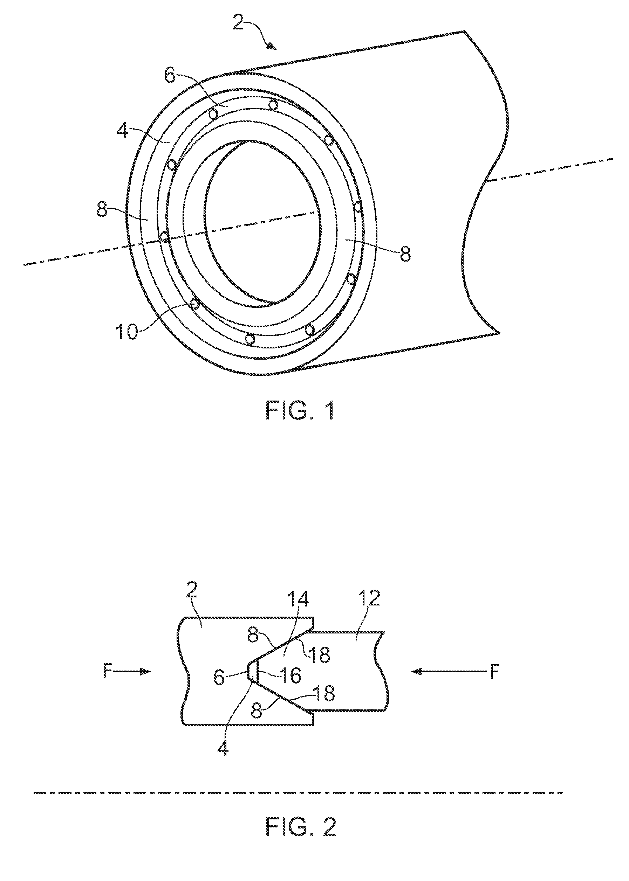

Conic couplings are known which comprise a female element having a recess which is of conical or frustoconical cross-section. An example of such a female element is shown in Figure 1. The female element 2 comprises an annular recess 4 which has an end surface 6 and two angled side surfaces 8 disposed either side of the end surface 6 on radially inner and outer sides. A plurality of holes 10 are provided through the end surface 6 for receiving bolts or other fasteners. Figure 2 is a cross-section through the coupling and shows the female element abutting with a male element 12. The male element 12 has an annular protrusion 14 with a corresponding cross-section formed by an end surface 16 and two angled side surfaces 18 disposed either side of the end surface 14 on radially inner and outer sides. The protrusion 14 of the male element 12 is received within the recess 4 of the female element 2, as shown.

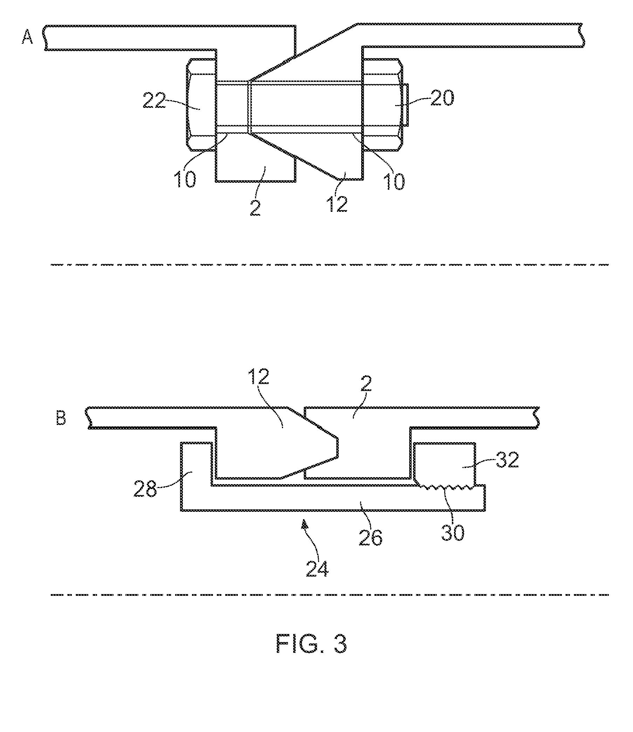

The side surfaces of the male and female elements abut one another and an axial load is applied, as indicated by arrows F, to clamp the two elements together. Rotation of the male or female element is transmitted to the other element by friction between the abutting side surfaces. As shown in Figure 3A, the axial load may be placed on the male and female elements by bolting them together through the holes 10 in the female element and corresponding holes 10 in the male element. A suitable fastener such as nut 20 and bolt 22 may be used to create a compressive force between the male element 12 and the female element 2.

Alternatively, the axial load may be applied using the clamping arrangement shown in Figure 3B. An annular clamp 24 comprises an axial arm 26 having a radial clamping member 28 extending from one end and a thread 30 located at or near an opposite end. The thread 30 receives a nut 32 which is screwed into the thread thus reducing the distance between the radial clamping member 28 and the nut 32, producing a compressive force between the male element 12 and the female element 2.

The torque capacity of the coupling is a function of the axial load, the cone angle (angle of the side surfaces), the contact diameters and the coefficient of friction between the abutting surfaces.

In such a coupling, the rigidity and geometric accuracy affects the contact pressure distribution of the male and female elements. A non-uniform contact pressure distribution is particularly evident at the extremities of the contact.

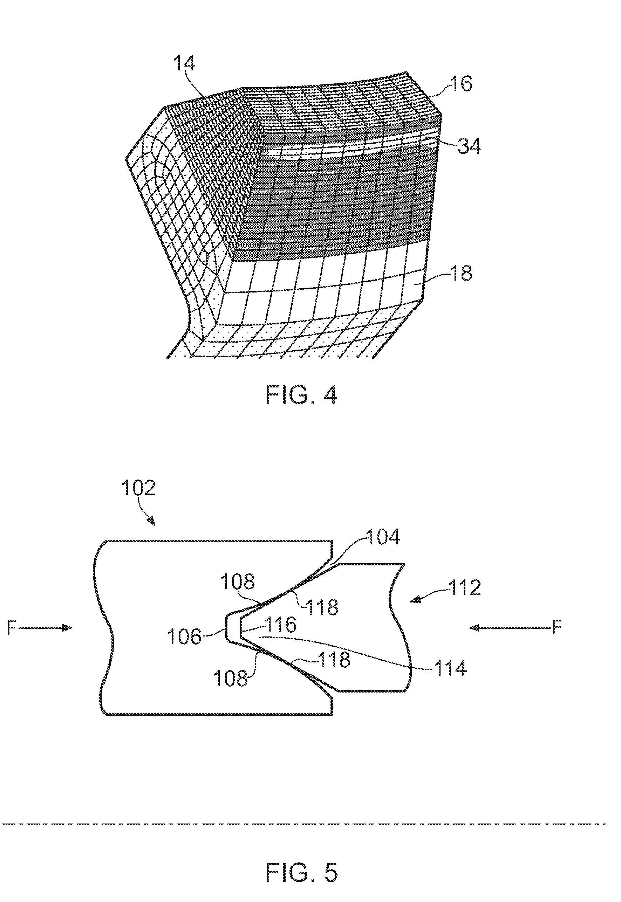

For example, figure 4 shows a finite element analysis of the pressure distribution across a side surface 18 of a protrusion 14 of a male element 12 when coupled with a female element as shown in Figure 2. The pressure distribution indicates an area 34 of higher pressure located towards the end surface 16 of the protrusion 14.

However the pressure can vary along the length of the contact area between the protrusion 14 and recess 4. These localised peaks in pressure may lead to yielding of the material of the coupling. As a result, such yielding can affect the geometric accuracy of the coupling. Also when the coupling is used with a rotor of a gas turbine engine, the yielding may cause misalignment and rotor unbalance. This is particularly a problem on re-build if only the male or female element is replaced.

The present invention provides an improved conic coupling which has a more even pressure distribution across its abutting surfaces.

### Statements of Invention

In accordance with a first aspect of the invention, there is provided a male or female element for a conic coupling, the element comprising: an end surface and two angled side surfaces disposed either side of the end surface; wherein a coating is applied to at least one side surface, the coating having a varying coefficient of friction across the side surface.

The coating may have a gradient of coefficient of friction across the side surface.

The maximum coefficient of friction may be located at a predetermined position on the side surface.

In accordance with a second aspect of the invention, there is provided a male or female element for a conic coupling, the element comprising: an end surface and two angled side surfaces disposed either side of the end surface; wherein at least one of the side surfaces has a non-planar profile.

The side surfaces of the male or female element are configured such that a uniform pressure distribution is produced across the surface when the element is in use with a corresponding male or female element having a planar side surface. This allows a larger clamping load to be placed on the coupling without locally exceeding the yield strength of the material. The larger clamping load increases the friction between the male and female elements and thereby increases the torque capacity of the coupling.

The increased torque capacity of the coupling also increases the durability of the coupling since it reduces the wear between the male and female elements. This therefore reduces costs. The present invention also provides better balancing and faster build times over conventional couplings.

The at least one side surface has a convex profile. The convex profile may comprise a single continuous curve, or multiple planar surfaces which define a convex profile, for example a polygon having interior angles less than 180 degrees.

A coating may be applied to the at least one side surface so as to produce the convex profile.

The coating may be of non-uniform thickness.

The coating may be of uniform thickness.

The coefficient of friction of the coating may vary over the at least one side surface.

The coating may have a gradient of coefficient of friction across the at least one side surface.

The maximum coefficient of friction may be located at a predetermined position on the at least one side surface.

One or both of the side surfaces of one or both of the male and female elements may be coated with Silicon Nitride. Silicon Nitride has a coefficient of friction in the order of 1.2 which would lead to an increase in the torque capacity of the coupling by approximately 2 to 4 times over plain metal surfaces. In addition, Silicon Nitride has high compressive stress capabilities and high wear resistance and can be readily deposited using plasma spraying techniques. Alternatively, one or both of the side surfaces of one or both of the elements may be coated with copper or silver. Copper and silver both have coefficients of friction which exceed 1.0 and can be readily deposited as coatings.

The stiffness of at least one of the side surfaces may vary across the surface such that when either element is in use the or each side surface deforms to give a convex profile.

The stiffness may vary across the or each side surface by varying the thickness of the material adjacent to the or each side surface.

The elements may be annular.

The end surface may have a hole therethrough for receiving a fastener.

The male element of the present invention may be used with a female element to form a conic coupling, the female element having an end surface and two angled side surfaces disposed either side of the end surface, at least one of the side surfaces being planar.

The female element of the present invention may be used with a male element to form a conic coupling, the male element having an end surface and two angled planar side surfaces disposed either side of the end surface, at least one of the side surfaces being planar.

### Brief Description of the Drawings

For a better understanding of the invention, and to show more clearly how it may be carried into effect, reference will now be made, by way of example, to the accompanying drawings, in which:
Figure 1 is a perspective view of a conventional female element of a conic coupling;
Figure 2 is a cross-sectional view of a conventional conic coupling;
Figure 3 is a cross-sectional view of a conventional conic coupling showing two methods of clamping the elements together;
Figure 4 is a perspective view of a conventional male element of a conic coupling showing the pressure distribution under clamping;
Figure 5 is a cross-sectional view of a conic coupling in accordance with a first embodiment of the invention;
Figure 6 is a cross-sectional view of a conic coupling in accordance with a second embodiment of the invention;
Figure 7 is a cross-sectional view of a conic coupling in accordance with a third embodiment of the invention; and
Figure 8 is a cross-sectional view of a gas turbine engine in which the invention may be utilised.

### Detailed Description

Figure 5 shows a coupling in accordance with the present invention. The male element 112 of the coupling is the same as the male element 12 of Figure 2 and has an annular protrusion 114 with a corresponding cross-section formed by an end surface 116 and two angled side surfaces 118 disposed either side of the end surface 114 on radially inner and outer sides.

The female element 102 comprises an annular recess 104 which has an end surface 106 and two angled side surfaces 108 disposed either side of the end surface 106 on radially inner and outer sides.

The side surfaces 118 of the male element 112 are both planar. In contrast, the side surfaces 108 of the female element 102 are machined to be non-planar and curve outwards in a convex manner towards the male element 112.

In use, the non-planar side surfaces 108 of the female element 102 act to reduce the pressure at the extremities of the coupling and thus have been found to give a more uniform pressure distribution. This allows a larger clamping load to be placed on the coupling without locally exceeding the yield strength of the material. The larger clamping load increases the friction between the male and female elements and thereby increases the torque capacity of the coupling.

Alternatively, the coupling may have a female element with planar side surfaces and a male element with non-planar side surfaces which curve outwards in a convex manner. What is important is that one of the male or female elements has planar side surfaces and the other of the elements has non-planar side surfaces that curve in a convex manner.

A coating is deposited on to the side surfaces. The coating may be of uniform thickness on the non-planar side surfaces. Alternatively, the coating may be deposited on a planar surface and deposited so as to have a variable thickness and thus to define the non-planar surface. Further still, the coating may be applied to a non-planar surface and have a variable thickness so as to produce the desired curvature. The coating has a coefficient of friction which varies across the side surface of the element. The variation of the coefficient of friction may be advantageously a gradient with the highest value located at a predetermined position where it is beneficial to have the highest friction.

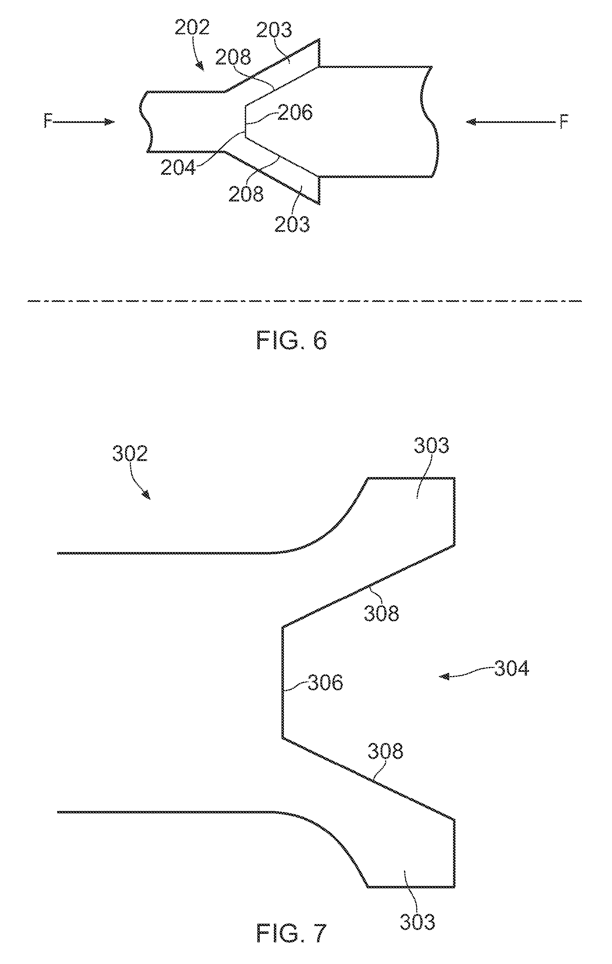

Figure 6 shows a second embodiment of the invention. In this embodiment, the female element 202 comprises two angled arms 203 defining an annular recess 204 therebetween. The annular recess 204 comprises an end surface 206 and two angled side surfaces 208 disposed either side of the end surface 206 on radially inner and outer sides.

In use, the side surfaces 208 of the female element 202 act to reduce the pressure at the extremities of the coupling and thus have been found to give a more uniform pressure distribution. This allows a larger clamping load to be placed on the coupling without locally exceeding the yield strength of the material. The larger clamping load increases the friction between the male and female elements and thereby increases the torque capacity of the coupling.

The stiffness of the two angled arms 203 varies along their length. Unloaded, the side surfaces 208 are planar, however when a load is applied to them, the variable stiffness of the angled arms 203 causes the side surfaces 208 to become non-planar and to curve outwards in a convex manner.

Figure 7 shows a third embodiment of the invention, using an alternative method for achieving the variable stiffness of the second embodiment. Similarly to the second embodiment, the female element 302 comprises two angled arms 303 defining an annular recess 304 therebetween. The annular recess 304 comprises an end surface 306 and two angled side surfaces 308 disposed either side of the end surface 306 on radially inner and outer sides.

In this embodiment, the arms 303 have a thickness which varies along their length. This leads to the arms 303 having a stiffness which varies correspondingly along their length. As in the second embodiment, the side surfaces 308 are planar when unloaded, but the variable stiffness causes the side surfaces 208 to become non-planar and to curve outwards in a convex manner when a load is applied.

In use, the side surfaces 308 of the female element 302 act to reduce the pressure at the extremities of the coupling and thus have been found to give a more uniform pressure distribution. This allows a larger clamping load to be placed on the coupling without locally exceeding the yield strength of the material. The larger clamping load increases the friction between the male and female elements and thereby increases the torque capacity of the coupling.

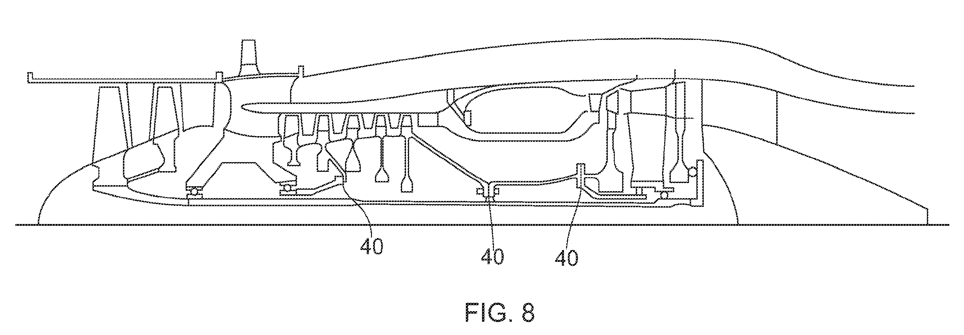

The invention may be used in any application where shafts are coupled. However, the invention may be particularly beneficial when used in a gas turbine engine for coupling rotating components such as rotors. Figure 8 shows a cross-section through a gas turbine engine, with arrows 40 identifying locations where the coupling of the present invention may be applied.

As described above in relation to the embodiment of Figure 5, a coating is likewise applied to the side surfaces of the male and/or female elements of the coupling of the other embodiments of the present invention. The coating has a coefficient of friction which varies across the side surface of the element. The variation of the coefficient of friction may be advantageously a gradient with the highest value located at a predetermined position where it is beneficial to have the highest friction.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

## Claims

1. A male or female element (12,2) for a conic coupling, the element comprising:
an end surface (16,6) and two angled side surfaces (18,8) disposed either side of the end surface; wherein a coating is applied to at least one of the side surfaces, the coating having a varying coefficient of friction across the surface.

2. An element (12,2) as claimed in claim 1, wherein the coating has a gradient of coefficient of friction across the at least one side surface.

3. An element (12,2) as claimed in claim 1 or 2, wherein the maximum coefficient of friction is located at a predetermined position on the at least one side surface.

4. An element (12,2) as claimed in any one of the preceding claims wherein the coating is applied to the at least one side surface (18,8) so as to produce a convex profile.

5. An element (12,2) as claimed in any one of claims 1 to 4, wherein the coating is of non-uniform thickness.

6. An element (12,2) as claimed in any one of claims 1 to 4, wherein the coating is of uniform thickness.

7. An element (12,2) as claimed in any one of the preceding claims, wherein the stiffness of the at least one side surface (18,8) varies across the surface such that when the element is in use the at least one side surface deforms to give a convex profile.

8. An element (12,2) as claimed in claim 7, wherein the stiffness varies across the at least one side surface (18,8) by varying the thickness of the material adjacent to the at least one side surface.

9. An element (12,2) as claimed in any one of the preceding claims, wherein the elements are annular.

10. An element (12,2) as claimed in any one of the preceding claims, wherein the end surface (16,6) has a hole therethrough for receiving a fastener.

11. An element (12,2) as claimed in any one of claims 4 to 10 wherein both of the side surfaces (18,8) have a convex profile.

12. A coupling comprising the male element (12) of any one of claims 4 to 10 and a female element (2), the female element having an end surface (6) and two angled planar side surfaces (8) disposed either side of the end surface.

13. A coupling comprising the female element (2) of any one of claims 4 to 10 and a male element (12), the male element having an end surface (16) and two angled planar side surfaces (18) disposed either side of the end surface.
